# EUROPÄISCHE PATENTSCHRIFT

(11) **EP 3 255 472 B1**
(45) Veröffentlichungstag und Bekanntmachung des Hinweises auf die Patenterteilung: **18.02.2026**
(21) Anmeldenummer: 17020180.0
(22) Anmeldetag: 28.04.2017
(51) Int. Cl.: G02B 6/44

(54) **KABELZUGABFANGELEMENT**
CABLE RETENTION ELEMENT
ÉLÉMENT D'INTERCEPTION DE TIRETTE À CÂBLE

(30) Priorität: 20.05.2016 DE 202016102706 U
(43) Veröffentlichungstag der Anmeldung: 13.12.2017
(73) Patentinhaber: Hauff-Technik GRIDCOM GmbH, 73494 Rosenberg (DE)
(72) Erfinder: Reinhard, Feltgen, 73489 Jagstzell (DE)
(74) Vertreter: Szynka Smorodin Patentanwälte Partnerschaft mbB

(56) Entgegenhaltungen:
- US-A1- 2010 092 147
- US-A1- 2013 233 612
- US-A1- 2015 268 423

## Beschreibung

Die Erfindung betrifft ein Kabelzugabfangelement für Glasfaserkabel Erfindung betrifft auch eine Glasfaseranschlussdose aufweisend ein Gehäuse zur Aufnahme eines Kabelabschnitts eines Glasfaserkabels und mit einem solchen Kabelzugabfangelement.

Grundsätzlich ist die Erfindung zum Zugabfang eines oder mehrerer Kabel in nahezu beliebiger Ausführung und damit insbesondere für Glasfaserkabel geeignet.

Als Glasfaserkabel werden vorliegend Lichtwellenleiter (auch: Lichtleitkabel) verstanden. Die Erfindung kann für mehradrige oder einadrige Glasfaserkabel verwendet werden.

Glasfaserkabel werden in der Nachrichtentechnik als Übertragungsmedium in Bereichen eingesetzt, in denen hohen Reichweiten und Übertragungsraten erforderlich sind. Insbesondere wenn Glasfasernetze bis zum Verbraucher verlegt werden sollen ("fibre to the home"), werden optische Telekommunikationssteckdosen (OTO, "optical telecommunications outlet"), auch Glasfaseranschlussdosen genannt, zur Aufnahme und Führung des Glasfaserkabels auf eine Kupplung nötig.

Eine derartige Glasfaseranschlussdose dient dabei häufig dem Abschluss eines Glasfasernetzwerks. Von einer solchen - meist standardisierten - Kupplung können die Glasfasernetzwerke komfortabel über Glasfaseranschlusskabel mit korrespondierenden Steckern mit einer Endeinrichtung, zum Beispiel einem Router, verbunden werden.

Zum Schutz vor mechanischen Beschädigungen der Verbindungsstelle sind Maßnahmen zum Kabelzugabfang, insbesondere an der Eintrittsstelle des Glasfaserkabels in die Telekommunikationssteckdose, erforderlich.

In der DE 10 2008 027 381 A1 ist eine Glasfaseranschlussdose gezeigt, wie diese in der Praxis häufig eingesetzt wird. Die Glasfaseranschlussdose umfasst dabei ein mindestens zweiteiliges Gehäuse mit einem Unterteil und einem Deckelteil, wobei das Deckelteil schwenkbar an dem Unterteil angeordnet ist. Die Glasfaseranschlussdose weist außerdem mindestens eine Aufnahme für einen Spleiß auf. Ein Spleiß ist die Verbindung zweier Glasfasern, die beispielsweise für die Verbindung des Glasfaserkabels mit einer Kupplung erforderlich ist. Eine derartige Verbindungsstelle zwischen zwei Glasfasern ist als äußerst empfindlich gegenüber Umwelteinflüssen anzusehen und dementsprechend sorgfältig bzw. schützend zu lagern und zu fixieren. Die in der DE 10 2008 027 381 A1 beschriebene Glasfaseranschlussdose weist außerdem mindestens eine Zuführung für ein Glasfaserkabel und eine Aufnahme für eine separat ausgebildete Kupplung auf.

Wie eingangs erwähnt ist in der Glasfasertechnik regelmäßig insbesondere ein Schutz der Verbindungsstellen der Glasfaserkabel vor mechanischer Belastung notwendig. Beispielsweise soll ein Herausziehen eines Glasfaserkabels aus einer Glasfaseranschlussdose nicht ohne weiteres möglich sein. Um mechanische Kräfte möglichst von den Verbindungsstellen, insbesondere von den Spleißen, fernzuhalten, ist es aus der Praxis bekannt, zugeführte Glasfaserkabel an dem Gehäuse der Glasfaseranschlussdose durch Kabelbinder zu fixieren. Eine derartige Zugentlastung über einen Kabelbinder ist jedoch keine vollumfänglich zufriedenstellende Lösung des Problems. So kann eine ggf. zu starke Fixierung durch die Kabelbinder aufgrund von Quetschung zu einem Bruch der Glasfasern in dem Glasfaserkabel führen oder eine zu schwache Fixierung keine ausreichende Zugentlastung gewährleisten.

Um eine verbesserte Zugentlastung zu ermöglichen, ist es auch bekannt, in der Glasfaseranschlussdose eine Zugentlastungsvorrichtung vorzusehen. Die WO 2009/149813 A1 zeigt eine Zugentlastungsvorrichtung, insbesondere als Bestandteil einer Glasfaseranschlussdose. Die gezeigte Zugentlastung ist dabei mindestens zweiteilig ausgebildet, wobei ein inneres Teil eine Aufnahme zum Einlegen mindestens eines Teils des Kabels, insbesondere von Kevlarfasern (nachfolgend als Kevlargarn bezeichnet) eines Glasfaserkabels, und einen Wickelbereich aufweist. Durch Drehung des inneren Teils mittels eines Werkzeugs wird das Kevlargarn auf den Wickelbereich aufgewickelt. Ein äußeres Teil weist mindestens ein Fixiermittel auf, das bei einer Zusammenfügung der Zugentlastungsvorrichtung das Kabel oder einen Teil des Kabels, insbesondere das Kevlargarn, gegen den Wickelbereich drückt. Hierdurch kann das Kabel ausreichend festgehalten werden.

Weiter zeigt die DE 10 2006 046 181 B4 eine Zugentlastungsvorrichtung für ein Glasfaserkabel, umfassend einen Grundkörper und einen Fixierkörper. Eine Zugentlastung wird abermals durch Verklemmen des Kevlargarns eines Glasfaserkabels im Inneren der Zugentlastungsvorrichtung erreicht, wobei zumindest ein Teil der Fasern benachbart zum Austritt aus dem Kabelmantel zwischen zwei Klemmkörpern arretiert ist.

Der Stand der Technik enthält außerdem noch die US 2015/268423 A1, die dem Oberbegriff des Anspruchs 1 zugrunde liegt und ein Kabelzugabfangelement zeigt, bei dem zwei Teile, ein oberer und ein unterer, locker zusammengesetzt und dann zur Fixierung parallel zur Kabelrichtung relativ zueinander verschoben und damit verrastet werden. Außerdem wird verwiesen auf die US 2010/092147 A1 und die US 2013/233612 A1, die jeweils ebenfalls Kabelzugabfangelemente zeigen.

Der vorliegenden Erfindung liegt die Aufgabe zugrunde, ein Kabelzugabfangelement für Glasfaserkabel zu schaffen, das einen einfachen Aufbau aufweist, eine zuverlässige Zugentlastung ermöglicht und vor allem im Bereich der Glasfasernetzwerktechnik universell einsetzbar ist. Der vorliegenden Erfindung liegt auch die Aufgabe zugrunde, eine Glasfaseranschlussdose zur Aufnahme eines Kabelabschnitts unter Einbeziehung eines Kabelzugabfangelement zu schaffen.

Diese Aufgabe wird für das Kabelzugabfangelement mit den in Anspruch 1 aufgeführten Merkmalen gelöst. Die abhängigen Ansprüche betreffen vorteilhafte Ausführungsformen und Varianten der Erfindung.

Das erfindungsgemäße Kabelzugabfangelement für Glasfaserkabel umfasst einen Grundkörper zur Befestigung des Kabelzugabfangelements in einer Befestigungseinrichtung, wobei der Grundkörper wenigstens eine Aufnahme zum Einlegen eines Glasfaserkabels und wenigstens ein Führungsmittel zur Umlenkung eines Fasermaterials aufweist. Das Kabelzugabfangelement umfasst weiter wenigstens ein Aufnahmeelement zum Einlegen einer Glasfaser sowie wenigstens einen Fixierkörper, der mit dem Grundkörper zum Einlegen des Glasfaserkabels verbindbar ist, wobei der Fixierkörper Vorsprünge aufweist, die derart ausgebildet sind, dass sich die Vorsprünge, wenn der Fixierkörper mit dem Grundkörper verbunden ist, in die Aufnahme erstrecken, um ein in den Grundkörper aufgenommenes Glasfaserkabel durch Verklemmen des umgelenkten Fasermaterials zu fixieren.

Das erfindungsgemäße Kabelzugabfangelement weist ferner die weiteren im Anspruch 1 aufgeführten Merkmale auf.

Dadurch, dass der Grundkörper geeignet ist, um mit einer korrespondierenden Befestigungseinrichtung eines separaten Bauteils, beispielsweise einer Glasfaseranschlussdose, zusammenzuwirken, kann das Kabelzugabfangelement sicher und komfortabel an dem separaten Bauteil befestigt werden. Das Kabelzugabfangelement kann an einer beliebigen Befestigungseinrichtung, die mit dem Grundkörper korrespondiert, befestigt werden.

Eine effiziente Zugentlastung für ein Glasfaserkabel kann wie folgt erreicht werden. Das Glasfaserkabel kann zunächst von seiner Ummantelung befreit werden, um in dem Kabelmantel angeordnetes Fasermaterial, üblicherweise ein Garn, beispielsweise aus Kevlar oder Aramid, sowie das sog. Röhrchen, welches die Glasfaser beinhaltet, freizulegen. Das Glasfaserkabel kann dann in die Aufnahme des Grundkörpers eingelegt werden, wobei die Glasfaser in das speziell hierfür vorgesehene Aufnahmeelement zum Einlegen der Glasfaser eingelegt wird. Selbstverständlich können in einem Glasfaserkabel oder sonstigem Kabel, auf das die Erfindung angewendet wird, auch mehrere Glasfasern bzw. Kabeladern vorgesehen sein. In diesem Fall kann auch vorgesehen sein, dass das Aufnahmeelement zum Einlegen der Glasfaser mehrere Glasfasern bzw. Kabeladern aufnehmen kann oder es sind gegebenenfalls mehrere Aufnahmeelemente vorgesehen.

Zur Fixierung des Glasfaserkabels an dem Kabelzugabfangelement kann das Fasermaterial durch das Führungsmittel umgelenkt und in Richtung der Eintrittsstelle des Glasfaserkabels in den Grundkörper zurückgeschlagen werden. Vorzugsweise wird das Fasermaterial durch das Führungsmittel um ca. 180° umgelenkt. Durch das Umlenken des Fasermaterials kann das Glasfaserkabel bereits grob verspannt werden. Es kann auch vorgesehen sein, das Fasermaterial an dem Führungsmittel zunächst zu fixieren, also beispielsweise das Führungsmittel mit dem Fasermaterial zu umwickeln. Zur endgültigen Fixierung des Glasfaserkabels mit Hilfe des Fasermaterials wird schließlich der Fixierkörper verwendet. Der Fixierkörper wird hierzu ebenfalls in die Aufnahme zum Einlegen des Glasfaserkabels eingesetzt, wobei die Vorsprünge des Fixierkörpers ein Verklemmen bzw. Quetschen des umgelenkten Fasermaterials bewirken.

Selbstverständlich kann ein derartiges Kabelzugabfangelement auch für eine beliebig andere Kabelart, beispielsweise für ein Koaxialkabel, eingesetzt werden.

Erfindungsgemäß ist ferner vorgesehen, dass sich die Vorsprünge des Fixierkörpers zu ihren freien Enden hin und in Richtung ihrer Erstreckung in die Aufnahme verjüngen, sodass sich die Vorsprünge in einer zu der Längsachse der Aufnahme senkrechten Richtung der Erstreckung in die Aufnahme verjüngen, wenn der Fixierkörper in den Grundkörper eingesetzt ist.

Die Verjüngung der Vorsprünge kann zwei Funktionen erfüllen. Zum einen wird für einen verbesserten Formschluss mit dem Glasfaserkabel gesorgt und zum anderen wird eine besonders gute Fixierung des umgelenkten Fasermaterials erreicht. Es kann vorgesehen sein, dass die Vorsprünge konisch ausgebildet sind.

Der Einsatz konisch ausgebildeter Vorsprünge hat sich zur Fixierung bzw. Verklemmung des Fasermaterials als besonders geeignet herausgestellt.

Es kann weiter vorgesehen sein, dass Kontaktflächen des Fixierkörpers, die, wenn der Fixierkörper in den Grundkörper eingesetzt ist, an Innenflächen des Grundkörpers anliegen, zumindest teilweise eine strukturierte Oberfläche aufweisen, um ein Entfernen des Fixierkörpers von dem Grundkörper zu erschweren. Durch eine strukturierte Oberfläche des Fixierkörpers kann eine Haltekraft des Fixierkörpers an dem Grundkörper verstärkt werden. Durch die strukturierte Oberfläche kann die Reibungskraft und/oder Anpresskraft bzw. der Formschluss zwischen dem Fixierkörper und dem Grundkörper verbessert werden. Dadurch wird erreicht, dass der Fixierkörper sich nicht in unerwünschter Weise, insbesondere nicht selbstständig, von dem Grundkörper lösen oder lockern kann.

Die Oberfläche ist vorzugsweise derart strukturiert, dass die Strukturierung ein Einstecken des Fixierkörpers nicht erschwert, jedoch eine Bewegung des Fixierkörpers in die entgegengesetzte Richtung erschwert bzw. behindert wird.

Vorzugsweise ist eine strukturierte Oberfläche zumindest an den Oberflächen/Kontaktflächen der Vorsprünge des Fixierkörpers vorgesehen, mit denen diese an den Innenflächen des Grundkörpers anliegen.

In einer Weiterbildung der Erfindung kann vorgesehen sein, dass die Kontaktflächen Verrastungselemente und/oder Verzahnungselemente aufweisen.

Es hat sich gezeigt, dass insbesondere die Verwendung von Verrastungselementen und/oder zahnförmigen Erhebungen eine ausreichend starke Verklemmung bzw. Fixierung des Fixierkörpers an dem Grundkörper ermöglicht.

Es kann vorgesehen sein, dass die zahnförmigen Erhebungen bzw. Verzahnungselemente entgegen der Richtung, in der der Fixierkörper eingesetzt wird, ansteigen. In vorteilhafter Weise kann dadurch der Fixierkörper leicht in den Grundkörper bzw. die Aufnahme des Grundkörpers eingesetzt werden, während jedoch eine entgegengesetzte Auszugsbewegung des Fixierkörpers erschwert ist.

Selbstverständlich kann der Fachmann auch eine beliebig andere Geometrie der Verrastungselemente und/oder Verzahnungselemente an den Kontaktflächen des Fixierungselements vorsehen.

In einer Weiterbildung kann vorgesehen sein, dass wenigstens eine Seitenwand des Grundkörpers wenigstens einen Rücksprung und/oder eine Führung aufweist, wobei der wenigstens eine Rücksprung und/oder die Führung angeordnet und ausgebildet ist, um jeweils wenigstens einen Teil des Vorsprungs des Fixierkörpers beim Verbinden mit dem Grundkörper zu führen und/oder aufzunehmen.

Durch ein Zusammenwirken von Rücksprüngen und Vorsprüngen bzw. durch eine Führung der Vorsprünge kann ebenfalls ein Entfernen des Fixierkörpers von dem Grundkörper nach dessen Einsatz erschwert werden. Des Weiteren kann der Fixierkörper gegen Verrutschen, beispielsweise entlang der Längsrichtung des Kabelzugabfangelements, gesichert werden.

Ein weiterer Vorteil der Rücksprünge besteht darin, dass die Vorsprünge, wenn diese sich entlang der Rücksprünge in die im Grundkörper ausgebildete Aufnahme für das Glasfaserkabel hinein bewegen, das umgelenkte Fasermaterial hintergreifen können. Das umgelenkte Fasermaterial verläuft, nachdem dieses um die Führungsmittel umgelenkt wurde, zumindest entlang eines Teilstücks parallel zu den Seitenwänden des Grundkörpers. Durch die Rücksprünge bzw. Vertiefungen in den Seitenwänden wird ein Freiraum geschaffen, der sich als besonders geeignet herausgestellt hat, um die Vorsprünge des Fixierkörpers einfahren zu lassen. Insbesondere wenn sich die Vorsprünge in Richtung zu ihren Enden verjüngen, vorzugsweise eine konische Form aufweisen, führt dies zu einer besonders geeigneten Verklemmung des Fasermaterials, ohne dass das Fasermaterial zerschnitten oder abgetrennt wird.

Vorzugsweise weisen die beiden gegenüberliegenden Seitenwände des Grundkörpers an ihrer jeweiligen Innenfläche eine, vorzugsweise mehrere Vertiefungen auf.

Auf die Ausbildung einer Vertiefung kann gegebenenfalls in dem Bereich, in dem das Fasermaterial unmittelbar um die Führungsmittel umgelenkt ist, verzichtet werden, insbesondere wenn aufgrund der Konstruktion der Führungsmittel in diesem Bereich ohnehin ein größerer Freiraum zum Eindringen der Vorsprünge zur Verfügung steht.

Es können nahezu beliebige Geometrien der Rücksprünge bzw. Vorsprünge bis hin zu flügelartigen Geometrien vorgesehen sein.

Es kann vorgesehen sein, dass ein Vorsprung des Fixierkörpers im Falle des eingesetzten Fixierkörpers derart angeordnet ist, dass der Vorsprung, wenn der Fixierkörper in den Grundkörper eingesetzt ist, das im Bereich des Führungsmittels umgelenkte Fasermaterial teilweise umschließt.

Gemäß einer Weiterbildung der Erfindung kann vorgesehen sein, dass der Grundkörper elastische Rastelemente zu verrastenden Befestigung des Kabelzugabfangelements in der Befestigungseinrichtung aufweist.

Dadurch, dass das Kabelzugabfangelement Rastelemente aufweist, kann das Kabelzugabfangelement komfortabel an einer Glasfaseranschlussdose oder einem sonstigen separaten Bauteil durch Verrasten befestigt bzw. eingeclipst werden. Die Verwendung elastischer Rastelement hat sich in der Verbindungstechnik bewährt.

In einer Weiterbildung kann vorgesehen sein, dass der Grundkörper zumindest bezüglich der elastischen Rastelemente flächensymmetrisch zu einer Mittelebene ausgebildet ist, die orthogonal zur Längsachse der Aufnahme zum Einlegen des Glasfaserkabels verläuft, so dass der Grundkörper in wenigstens zwei Orientierungen mit der Befestigungseinrichtung verbindbar ist.

Durch die flächensymmetrische Ausbildung zumindest der Rastelemente lässt sich der Grundkörper in zwei Orientierungen mit einer Befestigungseinrichtung verbinden, wodurch eine universelle Einsetzbarkeit des Kabelzugabfangelements unterstützt wird.

Selbstverständlich kann auch vorgesehen sein, dass der Grundkörper in wenigstens zwei Orientierungen mit der Befestigungseinrichtung verbindbar ist, wenn anstelle der elastischen Rastelemente beliebig andere Mittel zur Befestigung des Kabelzugabfangelements in der Befestigungseinrichtung eingesetzt werden.

In einer Weiterbildung der Erfindung kann vorgesehen sein, dass der Grundkörper eine Außenkontur aufweist derart, dass der Grundkörper mechanisch kompatibel zu einer standardisierten Befestigungseinrichtung für einen LC-Steckverbinder oder LC-Duplex-Steckverbinder oder SC-Steckverbinder oder E-2000-Steckverbinder für Glasfaserkabel ausgebildet ist.

Es kann vorgesehen sein, dass die Anordnung und Anzahl der Rastelemente derart gewählt ist, dass eine mechanische Kompatibilität zu einer standardisierten Befestigungseinrichtung für Glasfaserkabel gewährleistet ist.

Kabel und Buchsen für die Glasfasertechnik werden meist in standardisierter Ausführung verwendet. Es kann somit von Vorteil sein, wenn der Grundkörper des Kabelzugabfangelements durch seine gegebene äußere Form und/oder die Anordnung und Anzahl seiner Rastelemente mechanisch kompatibel zu einer standardisierten Aufnahme für einen LC-Steckverbinder, eingeschlossen LC-Duplex-Steckverbinder (LCdx), oder SC-Steckverbinder oder E-2000-Steckverbinder für Glasfaserkabel ausgebildet ist. Diese Auflistung ist selbstverständlich nicht abschließend und weitere alternative Varianten sind ebenfalls möglich.

Dadurch, dass das Kabelzugabfangelement eine standardisierte Form aufweist, kann das Kabelzugabfangelement in vorteilhafter Weise innerhalb der gesamten Glasfasernetzwerktechnik und somit auch unabhängig von einer spezifischen Glasfaseranschlussdose verwendet werden. In vorteilhafter Weise kann das Kabelzugabfangelement auch in Aufnahmen einrasten bzw. eingeclipst werden, die eigentlich zur Aufnahme einer Buchse bzw. einer Kupplung für Steckverbinder für die Glasfaseranschlusstechnik oder anderer Elemente, die die gleichen äußeren Abmessungen haben, vorgesehen sind. Bestehende Systeme können somit in vorteilhafter Weise mit einem Zugabfang erweitert werden.

Selbstverständlich kann der Fachmann, sofern er es für notwendig erachtet, das Kabelzugabfangelement auch mechanisch kompatibel zu einer anderweitigen Steckverbinderart, auch außerhalb der Glasfasertechnik, auslegen.

Es kann vorgesehen sein, dass der Grundkörper mit dem wenigstens einen Aufnahmeelement zum Einlegen der Glasfaser einteilig bzw. einstückig ausgebildet ist.

Eine einteilige Ausbildung des Kabelzugabfangelements kann fertigungstechnisch und wirtschaftlich von Vorteil sein. Eine einteilige Ausgestaltung ist außerdem als robuster anzusehen als eine mehrteilige Ausgestaltung. Grundsätzlich können alle Merkmale des Grundkörpers einteilig oder mehrteilig mit dem Grundkörper ausgebildet sein. Beispielsweise können die Führungsmittel und/oder die elastischen Rastelemente jeweils einteilig oder mehrteilig mit dem Grundkörper ausgebildet sein.

Vorzugsweise kann der Grundkörper mit allen Ausstattungsmerkmalen, insbesondere auch mit dem Aufnahmeelement einstückig durch ein Kunststoffspritzverfahren hergestellt sein.

Im erfindungsgemäßen Kabelzugabfangelement ist der Fixierkörper separat von dem Grundkörper.

Es kann vorgesehen sein, dass die Führungsmittel durch Ausnehmungen und/oder Stege bzw. domartige Erhebungen in dem Grundkörper gebildet sind. Insbesondere können die Führungsmittel zu dem Zweck verwendet werden, das Fasermaterial zunächst im Wesentlichen orthogonal zur Längsachse des Glasfaserkabels hineinzuführen. Eine derartige Führung kann beispielsweise durch Ausnehmungen, z.B. Bohrungen in dem Grundkörper, durch die das Fasermaterial hindurchgefädelt wird oder vorzugsweise durch Stege bzw. domartige Erhebungen, um die das Fasermaterial herumgewickelt wird, gebildet sein.

Vorzugsweise verläuft das Fasermaterial nach dessen Umlenkung und Rückführung in die Aufnahme parallel zu den Seitenwänden der Aufnahme bzw. parallel zur Längsachse des Glasfaserkabels in Richtung auf einen Eingang des Grundkörpers, durch den sich das Glasfaserkabel in den Grundkörper hineinerstreckt, zurück.

Es kann weiter vorgesehen sein, dass der wenigstens eine in den Grundkörper eingesetzte Fixierkörper unterhalb der Oberseite des Grundkörpers angeordnet ist, wenn der Fixierkörper in seiner Endposition mit dem Grundkörper verbunden ist.

Es kann auch vorgesehen sein, dass der wenigstens eine in den Grundkörper eingesetzte Fixierkörper koplanar mit der Oberseite des Grundkörpers abschließt, wenn der Fixierkörper in seiner Endposition mit dem Grundkörper verbunden ist.

Vorzugsweise ragt der Fixierkörper, der ein eingelegtes Glasfaserkabel fixiert, nicht über die Oberseite des Grundkörpers heraus. Dadurch wird eine kompakte Bauweise des Kabelzugabfangelements gewährleistet und außerdem sichergestellt, dass der Fixierkörper auf dem Kabelzugabfangelement nicht exponiert angeordnet ist, wodurch die Gefahr eines versehentlichen Lösens reduziert wird.

In einer Weiterbildung der Erfindung kann vorgesehen sein, dass die Aufnahme des Grundkörpers zum Einlegen eines Glasfaserkabels eine Breite bzw. einen Innendurchmesser von 1 mm bis 10 mm, besonders bevorzugt 3 mm bis 6 mm aufweist.

Es kann von Vorteil sein, das Kabelzugabfangelement bzgl. der Abmessungen der Aufnahme zum Einlegen des Glasfaserkabels an das einzulegende Glasfaserkabel anzugleichen.

Gemäß einer Weiterbildung der Erfindung kann das Kabelzugabfangelement wenigstens zwei Aufnahmen zum Einlegen von Glasfaserkabeln aufweisen, die vorzugsweise im Wesentlichen parallel zueinander durch den Grundkörper verlaufen. Die Aufnahmen können insbesondere auf gegenüberliegenden Seiten des Grundkörpers angeordnet sein.

Eine derartige Ausführung ermöglicht es, einen Zugabfang für mehrere, vorzugsweise zwei Glasfaserkabel vorzunehmen. Dabei kann ein derartiges Kabelzugabfangelement zur Aufnahme von zwei Glasfaserkabeln in beispielsweise einer Glasfaseranschlussdose verwendet werden. Es können aber auch mehr als zwei Glasfaserkabel aufgenommen werden, beispielsweise drei oder vier.

In einer Ausbildung der Erfindung kann das Kabelzugabfangelement aus Kunststoff gefertigt sein. Das Kabelzugabfangelement kann insbesondere gegossen sein und vorzugsweise durch Spritzgießen hergestellt werden.

Es kann vorgesehen sein an einer der Außenflächen des Fixierkörpers und/oder Grundkörpers eine Kennzeichnung und/oder ein Siegel bzw. eine Aufnahme für eine Kennzeichnung und/oder ein Siegel vorzusehen.

Mit einer Kennzeichnung ist vorliegend eine Etikettierung, beispielsweise durch ein Klebeetikett oder ein Kennzeichnungsschild, gemeint. Selbstverständlich kann auch eine einstückige Kennzeichnung mit dem Fixierkörper und/oder Grundkörper vorgesehen sein. Beispielsweise kann eine Kennzeichnung zusammen mit dem Fixierkörper aus einem Guss hergestellt sein. In vorteilhafter Weise kann dadurch ein Telekommunikationsdienstanbieter eine Kennzeichnung des Kabelzugabfangelements mit einem Firmenlogo oder ähnlichem vornehmen.

Vorzugsweise kann vorgesehen sein, dass das Kabelzugabfangelement in seiner Dimensionierung und Bauform zur Aufnahme in einer Glasfaseranschlussdose und zur Verwendung als Zugentlastung eines darin aufgenommenen Kabelabschnitts für Glasfaserkabel ausgelegt ist.

Hierdurch kann ein System aus einer Glasfaseranschlussdose und einem Kabelzugabfangelement bereitgestellt werden.

Eine besonders vorteilhafte Glasfaseranschlussdose ergibt sich aus Anspruch 12.

Erfindungsgemäß kann nach Anspruch 12 vorgesehen sein, dass die Glasfaseranschlussdose ein Gehäuse zur Aufnahme eines Kabelabschnitts eines Glasfaserkabels umfasst und die Glasfaseranschlussdose ferner wenigstens eine Ausnehmung zur Kabelzuführung in das Innere des Gehäuses sowie einen Anschlussbereich für wenigstens einen separat ausgebildeten Steckverbinder aufweist. Des Weiteren umfasst die Glasfaseranschlussdose einen Kabelfixierungsbereich, der eine Befestigungseinrichtung zur Befestigung eines an den Kabelabschnitt angebrachten Kabelzugabfangelements gemäß einem der Ansprüche 1-11 aufweist, wobei die Glasfaseranschlussdose mit einem solchen Kabelzugabfangelement gemäß einem der Ansprüche 1-11 ausgerüstet ist.

Durch die Befestigungseinrichtung der Glasfaseranschlussdose zur Befestigung eines an dem Kabelabschnitt angebrachten Kabelzugabfangelements kann eine sichere Zugentlastung durch das von der Glasfaseranschlussdose separat ausgebildete, erfindungsgemäße Kabelzugabfangelement ermöglicht werden. Zudem wird eine einfache und sichere Befestigung des Kabelabschnitts im Inneren der Glasfaseranschlussdose erreicht, ohne die aus dem Stand der Technik bekannten Nachteile mit sich zu bringen.

Eine derartige Glasfaseranschlussdose kann selbstverständlich auch zur Aufnahme anderer Kabelarten, beispielsweise zur Aufnahme von Telefon, Kupfer, Doppelader oder Koaxialkabeln verwendet werden. Die Glasfaseranschlussdose kann außerdem auch zur Aufnahme mehrerer Kabelabschnitte eines Glasfaserkabels oder zur Aufnahme mehrerer Kabelabschnitte mehrerer Glasfaserkabel verwendet werden.

Weiterhin kann die Glasfaseranschlussdose zusätzliche Mittel zur Befestigung des im Inneren des Gehäuses aufgenommenen Kabelabschnitts aufweisen.

Es kann weiter vorgesehen sein, dass das Gehäuse der Glasfaseranschlussdose ein Deckelteil zum Öffnen und Schließen der Glasfaseranschlussdose aufweist.

Dadurch, dass ein Deckelteil für die Glasfaseranschlussdose vorgesehen ist, können die in der Glasfaseranschlussdose aufgenommenen Elemente und Verbindungsstellen, beispielsweise die Spleiße, einfach und zuverlässig vor Umwelteinflüssen geschützt werden. Es kann vorgesehen sein, dass das Deckelelement schwenkbar in der Art eines Scharniers an einem Unterteil befestigt ist. Es kann außerdem vorgesehen sein, dass das Deckelelement in das Unterteil einrastbar ausgebildet ist.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind. Merkmal eines Ausführungsbeispiels sind auch losgelöst von den anderen Merkmalen des gleichen Ausführungsbeispiels umsetzbar und können dementsprechend von einem Fachmann zu weiteren sinnvollen Kombinationen mit Merkmalen anderer Ausführungsbeispiele verbunden werden.

In den Figuren sind funktionsgleiche Elemente mit denselben Bezugszeichen versehen.

### Es zeigt schematisch:

- Fig. 1: eine räumliche Darstellung eines erfindungsgemäßen Kabelzugabfangelements für Glasfaserkabel;
- Fig. 2: eine räumliche Darstellung des Grundkörpers des Kabelzugabfangelements der Figur 1 aus einem abweichenden Winkel;
- Fig. 3: eine räumliche Darstellung des Fixierkörpers des Kabelzugabfangelements der Figur 1 aus einem abweichenden Winkel;
- Fig. 4: eine Draufsicht auf den Grundkörper der Figur 1;
- Fig. 5: eine Seitenansicht auf den Grundkörper der Figur 1;
- Fig. 6: eine Vorderansicht auf den Grundkörper der Figur 1,
- Fig. 7: eine räumliche Darstellung eines Glasfaserkabels zur Verwendung mit der Erfindung;
- Fig. 8: eine räumliche Darstellung der Montage eines Glasfaserkabels an dem Kabelzugabfangelement für Glasfaserkabel (Schritt 1);
- Fig. 9: eine räumliche Darstellung der Montage eines Glasfaserkabels an dem Kabelzugabfangelement (Schritt 2);
- Fig. 10: eine räumliche Darstellung der Montage eines Glasfaserkabels an dem Kabelzugabfangelement (Schritt 3) und;
- Fig. 11: eine räumliche Darstellung der Montage des erfindungsgemäßen Kabelzugabfangelements in einer Glasfaseranschlussdose.

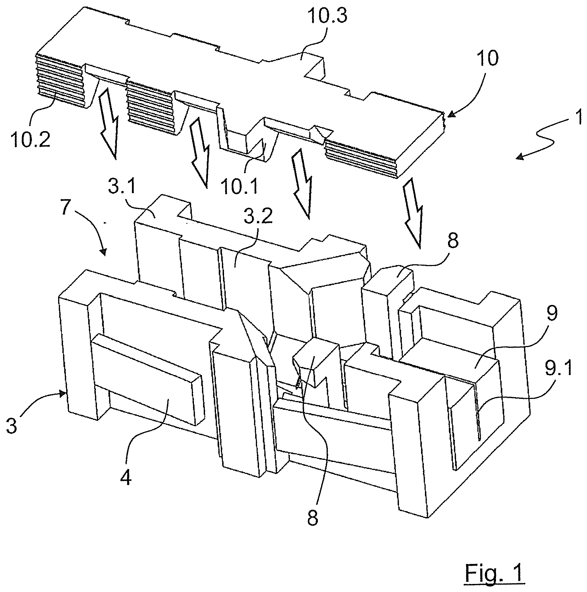

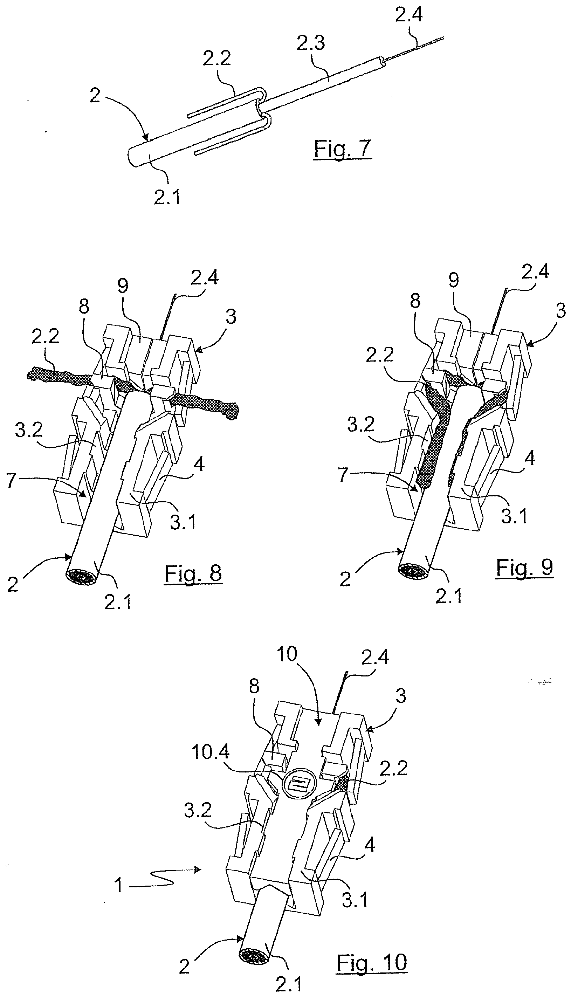

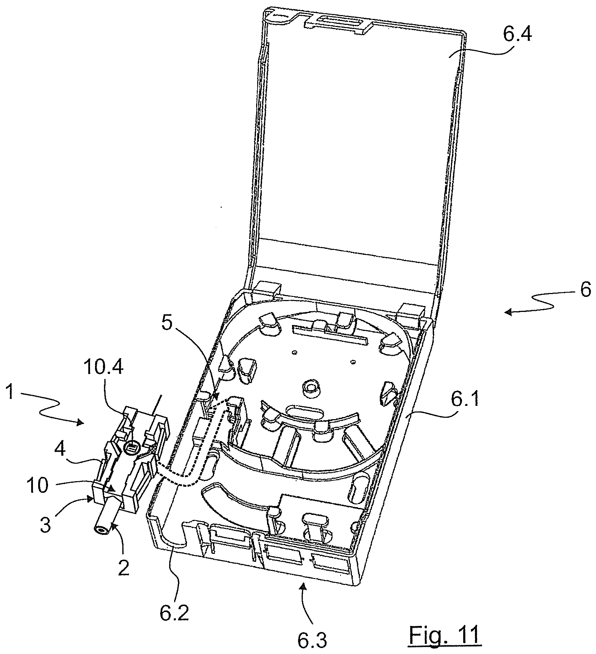

Die Figur 1 zeigt eine räumliche Darstellung eines Ausführungsbeispiels eines erfindungsgemäßen Kabelzugabfangelements 1 für Glasfaserkabel 2 (vgl. Figur 7). Das Kabelzugabfangelement 1 weist einen Grundkörper 3 mit elastischen Rastelementen 4 zur verrastenden Befestigung des Kabelzugabfangelements 1 in einer korrespondierenden Befestigungseinrichtung 5, beispielsweise in Form der - in Figur 11 gezeigten - Befestigungseinrichtung 5 einer Glasfaseranschlussdose 6, auf. Der Grundkörper 3 weist eine Aufnahme 7 zum Einlegen eines Glasfaserkabels 2 und Führungsmittel 8 zur Umlenkung eines Fasermaterials 2.2 auf. Das Kabelzugabfangelement 1 umfasst ferner ein Aufnahmeelement 9 zum Einlegen einer Glasfaser 2.4 und einen Fixierkörper 10, der mit dem Grundkörper 3 zum Einlegen des Glasfaserkabels 2 verbindbar ist. Der Fixierkörper 10 weist Vorsprünge 10.1 auf, die derart ausgebildet sind, dass sich die Vorsprünge 10.1, wenn der Fixierkörper 10 mit dem Grundkörper 3 verbunden ist, in die Aufnahme 7 erstrecken, um ein in dem Grundkörper 3 aufgenommenes Glasfaserkabel 2 - wie nachfolgend noch näher dargestellt ist - zu fixieren.

Im Ausführungsbeispiel sind zwei Führungsmittel 8 vorgesehen. Ferner sind im Ausführungsbeispiel vorzugsweise sechs Vorsprünge 10.1 vorgesehen.

Wie sich insbesondere aus Figur 1 ergibt, sind die Verzahnungselemente 10.2 auch an Kontaktflächen der Vorsprünge 10.1 des Fixierkörpers 10 ausgebildet, die, wenn der Fixierkörper 10 in den Grundkörper 3 eingesetzt ist, an der Innenfläche, vorzugsweise einer Seitenwand 3.1 des Grundkörpers 3, anliegen.

Im Ausführungsbeispiel ist vorgesehen, dass Verzahnungselemente 10.2 an vier Vorsprüngen 10.1 ausgebildet sind und ferner zwei entgegengesetzt ausgerichtete Seitenkanten des Fixierkörpers über Verzahnungselemente 10.2 verfügen. Die Verzahnungselemente 10.2 neigen sich dabei entgegen der Einsetzrichtung (in Figur 1 durch Pfeile angedeutet), wodurch ein Einsetzen des Fixierkörpers 10 leicht möglich, ein Entfernen des Fixierkörpers 10 aus dem Grundkörper 3 hingegen erschwert ist.

Alternativ zu Verzahnungselementen kann auch eine beliebige, hierfür geeignete strukturierte Oberfläche ausgebildet sein. Vorgesehen sein können auch Verrastungselemente. Des Weiteren kann vorgesehen sein, dass auch die Kontaktflächen des Grundkörpers 3, an denen der Fixierkörper 10 anliegt, wenn der Fixierkörper 10 in den Grundkörper 3 eingesetzt ist, Verzahnungselemente 10.2 aufweist. Die Verzahnungselemente 10.2 können alternativ und/oder ergänzend vorgesehen sein.

Vorzugsweise sind die Verzahnungselemente 10.2 am Fixierkörper 10 und/oder am Grundkörper 3 an Flächen ausgebildet, die sich planparallel zur Einsteckrichtung erstrecken.

Der im Ausführungsbeispiel dargestellte Fixierkörper 10 weist vorzugsweise Vorsprünge 10.1 auf, die sich in Richtung der Aufnahme 7 zum Einlegen des Glasfaserkabels 2 verjüngen. Die Vorsprünge 10.1 sind im Ausführungsbeispiel konisch ausgebildet.

Des Weiteren ist vorgesehen, dass der Grundkörper 3 Rücksprünge 3.2 an der Innenseite wenigstens einer, vorzugsweise an zwei gegenüberliegenden Seitenwänden 3.1 aufweist. Die Rückspränge 3.2 dienen dazu, jeweils wenigstens einen Teil eines Vorsprungs 10.1 des Fixierkörpers 10 beim Verbinden mit dem Grundkörper 3 aufzunehmen bzw. zu führen. Die Rücksprünge 3.2 können als Nuten mit oder ohne Hinterschneidung oder als Stufe, insbesondere im Bereich des Eingangs des Grundkörpers 3, ausgebildet sein.

Im Bereich der Führungsmittel 8 zur Umlenkung des Fasermaterials 2.2 ist am Fixierkörper 10 jeweils ein flügelartiger Vorsprung 10.3 vorgesehen. Die flügelartigen Vorsprünge 10.3 erstrecken sich im Wesentlichen rechtwinklig zu den Seitenwänden 3.1 und verlaufen im Bereich der Oberfläche des Fixierkörpers 10. Die flügelartigen Vorsprünge 10.3 erstrecken sich dabei seitlich nach außen und stehen vorzugsweise über die Seitenkanten des Fixierkörpers 10, insbesondere über die mit den Verzahnungselementen 10.2 ausgebildeten Kontaktflächen, seitlich über. Vorzugsweise ist dabei vorgesehen, dass die Seitenwände 3.1 des Grundkörpers 3 einen Verlauf aufweisen, der eine Aufnahme der flügelartigen Vorsprünge 10.3 ermöglicht.

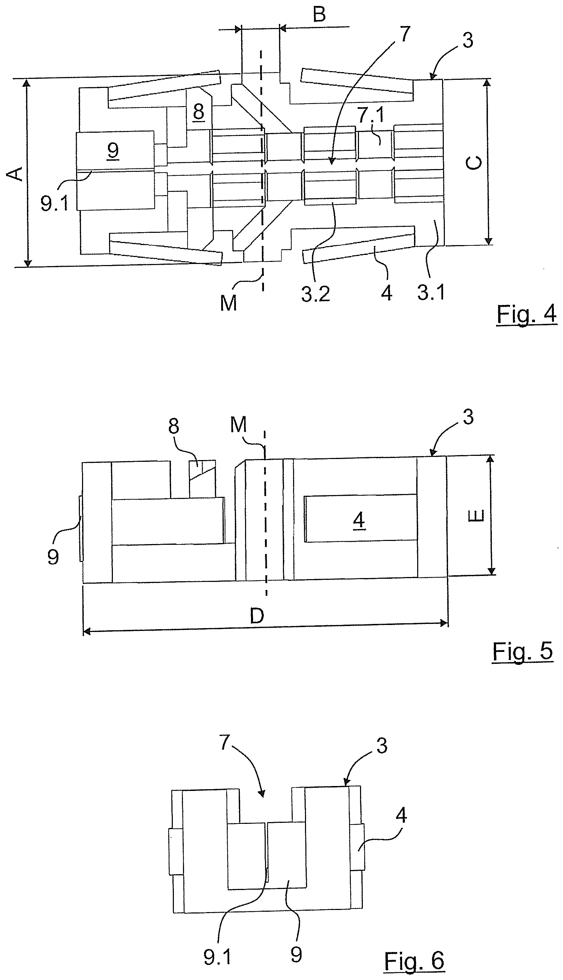

Es ist erkennbar, dass die elastischen Rastelemente 4 flächensymmetrisch zu einer Mittelebene M (vgl. Figur 4), die orthogonal zur Längsachse der Aufnahme 7 zum Einlegen des Glasfaserkabels 2 verläuft, ausgebildet sind, wodurch der Grundkörper 3 in wenigstens zwei Orientierungen mit der Befestigungseinrichtung 5 verbindbar ist.

In der dargestellten Ausführungsform sind der Grundkörper 3 und das Aufnahmeelement 9 zum Einlegen der Glasfaser 2.4 separat ausgebildete und anschließend zusammengesetzte Bauteile. Selbstverständlich kann aber auch eine Einteiligkeit vorgesehen sein.

Das Kabelzugabfangelement 1 ist in seiner gegebenen äußeren Form und der Anordnung und Anzahl der Rastelemente 4 mechanisch kompatibel zu einer standardisierten Aufnahme für einen Steckverbinder der Glasfasertechnik ausgebildet. Das im Ausführungsbeispiel dargestellte Kabelzugabfangelement 1 kann in einer Befestigungseinrichtung für SC/LCdx-Kupplungen befestigt werden.

Im Ausführungsbeispiel sind die Führungsmittel 8 durch Stege 8 in dem Grundkörper 3 gebildet.

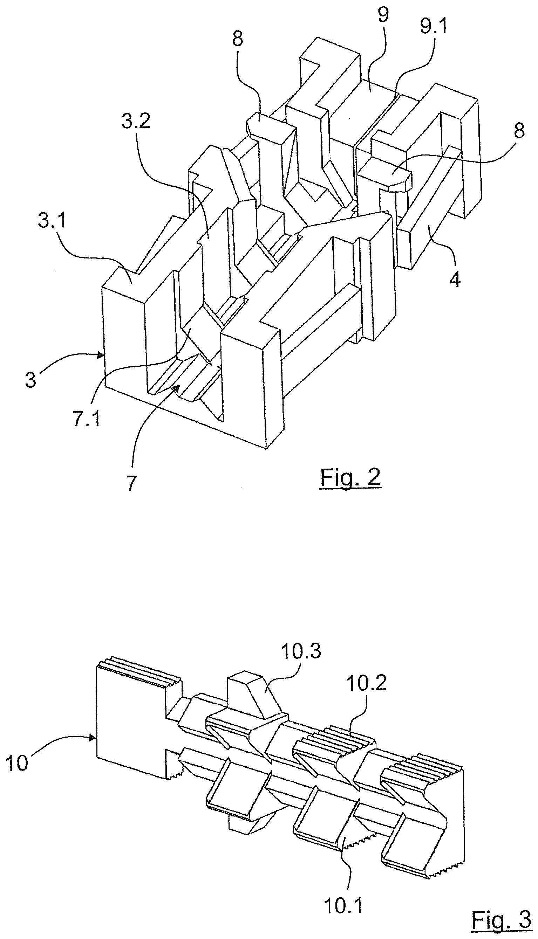

Figur 2 zeigt den Grundkörper 3 des Ausführungsbeispiels der Figur 1 separat von dem Fixierkörper 10.

In Figur 2 ist insbesondere erkennbar, dass die Aufnahme 7 zum Einlegen des Glasfaserkabels 2 eine Geometrie aufweist, die der Form eines eingelegten Glasfaserkabels 2 annähernd entspricht, wodurch das eingelegte Glasfaserkabel 2 formschlüssig aufliegen kann.

Hierzu ist vorzugsweise vorgesehen, dass der Boden der Aufnahme 7 bzw. des Grundkörpers 3 eine Vertiefung zum definierten Einlegen des Glasfaserkabels 2 aufweist. Die Vertiefung kann dabei angeschrägte Seitenwände 3.1 aufweisen, die eine optimierte Lagerung des Glasfaserkabels 2 ermöglichen. Ferner weist die Aufnahme 7 im Ausführungsbeispiel Anschrägungen 7.1 auf, die vorzugsweise an jeweils gegenüberliegenden Seitenwänden 3.1 ausgebildet sind. Die Anschrägungen 7.1 dienen zur Verbesserung der Anlage des Glasfaserkabels 2. Vorgesehen ist vorzugsweise, dass jeweils zwei Anschrägungen 7.1 ein Paar bilden, die an derselben axialen Position an zwei gegenüberliegenden Seitenwänden 3.1 ausgebildet sind. Vorzugsweise befindet sich jeweils ein Paar der Anschrägungen 7.1 und jeweils zwei Vorsprünge 10.1 an derselben axialen Position, so dass diese einen Innenring ausbilden, welcher ein eingebrachtes Glasfaserkabel 2 umfasst.

Figur 3 zeigt eine weitere Ansicht des erfindungsgemäßen Fixierkörpers 10 für das Kabelzugabfangelement 1 für Glasfaserkabel 2 separat von dem Grundkörper 3. Dabei sind insbesondere die konisch ausgebildeten Vorsprünge 10.1, die Verzahnungselemente 10.2 und die flügelartigen Vorsprünge 10.3 erkennbar.

In Figur 4 ist eine Draufsicht auf den Grundkörper 3 des Kabelzugabfangelements 1 der Figur 1 dargestellt. Es kann von Vorteil sein, wenn der Grundkörper 3 die folgenden ungefähren Abmessungen aufweist: A = 10,00 mm bis 20,00mm, vorzugsweise 14,50 mm, B = 1,00 mm bis 5,00 mm, vorzugsweise 2,90 mm und C = 5,00 mm bis 20,00 mm, vorzugsweise 12,80 mm.

Die äußere Form des Grundkörpers 3, auf die es bei der Befestigung des Kabelzugabfangelements 1 in der Befestigungseinrichtung 5, beispielsweise durch die elastischen Rastelemente 4, ankommt, ist vorzugsweise flächensymmetrisch zu der Mittelebene M, die orthogonal zur Längsachse der Aufnahme 7 zum Einlegen des Glasfaserkabels 2 verläuft, ausgebildet, wodurch der Grundkörper 3 in zwei Orientierungen mit der Befestigungseinrichtung 5 verbindbar ist.

Figur 5 zeigt eine Seitenansicht des Grundkörpers 3 des Kabelzugabfangelements 1 der Figur 1. Es kann von Vorteil sein, wenn dabei folgende Abmessungen vorgesehen sind: E = 5,00 mm bis 20,00 mm, vorzugsweise 9,30 mm und D = 20,00 mm bis 40,00 mm, vorzugsweise 28,00 mm.

In Figur 6 ist eine Vorderansicht bzw. die Ausgangsseite des Grundkörpers 3 mit Blick auf das Aufnahmeelement 9 zum Einlegen der Glasfaser 2.4 dargestellt. Dabei ist in dem Aufnahmeelement 9 ein Schlitz 9.1 vorgesehen, in den die Glasfaser 2.4 aufgenommen werden kann.

Figur 7 zeigt einen beispielhaften Kabelabschnitt des Glasfaserkabels 2 in einer räumlichen Darstellung. Das Glasfaserkabel 2 ist teilweise abisoliert und weist einen Außenmantel 2.1 auf, in dem sich eine Schutzbeschichtung 2.2 bzw. in dem sich ein schützendes Fasermaterial 2.2 bzw. ein Garn, beispielsweise aus Kevlar oder Aramid, sowie das sogenannte Röhrchen 2.3 erstreckt. Das dargestellte Fasermaterial 2.2 ist in Figur 7 in zwei Strängen zusammengewickelt. Innerhalb des Röhrchens 2.3 befindet sich der Kern, also die eigentliche Glasfaser 2.4.

In den Figuren 8 bis 10 ist dargestellt, wie ein Kabelabschnitt eines Glasfaserkabels 2 der Figur 7 an dem Kabelzugabfangelement 1 für Glasfaserkabel 2 montiert werden kann. In einem ersten Schritt (vgl. Figur 8) wird der Kabelabschnitt zunächst in die Aufnahme 7 zum Einlegen des Glasfaserkabels 2 eingelegt. Die Glasfaser 2.4 wird dabei in das Aufnahmeelement 9 bzw. in den Schlitz 9.1 in dem Aufnahmeelement 9 eingelegt. Schließlich wird das Fasermaterial 2.2 in zwei Stränge zusammengefasst und orthogonal an den Führungsmitteln 8 zur Umlenkung aus der Aufnahme 7 hinausgeführt. In einem zweiten Schritt (vgl. Figur 9) wird das Fasermaterial 2.2 an den Führungsmitteln 8 umgelenkt, wonach es umgeschlagen und in die Aufnahme 7 zum Einlegen des Glasfaserkabels 2 zurückgeführt und entgegen der Einlegerichtung des Glasfaserkabels 2 vorzugsweise vorgespannt wird. In einem letzten Schritt (vgl. Figur 10) wird der Fixierkörper 10 in die Aufnahme 7 eingesetzt und festgedrückt. Hierdurch wird ein in den Grundkörper 3 aufgenommenes Glasfaserkabel 2 durch Verklemmen des umgelenkten Fasermaterials 2.2 fixiert. Vorzugsweise verläuft der eingesetzte Fixierkörper 10 unterhalb der Oberseite des Grundkörpers 3.

In den Figuren 10 und 11 ist ein Fixierkörper 10 dargestellt, der auf seiner sichtbaren Außenfläche eine Kennzeichnung 10.4 aufweist.

Das Kabelzugabfangelement 1 kann in seiner Dimensionierung und Bauform zur Aufnahme in einer Glasfaseranschlussdose 6 und zur Verwendung als Zugentlastung eines darin aufgenommenen Kabelabschnitts für Glasfaserkabel 2 ausgelegt sein.

In Figur 11 ist eine im Wesentlichen bekannte Glasfaseranschlussdose 6 dargestellt. Die Glasfaseranschlussdose 6 weist ein Gehäuse 6.1 zur Aufnahme eines Kabelabschnitts eines Glasfaserkabels 2 auf und umfasst dabei wenigstens eine Ausnehmung 6.2 zur Kabelführung in das Innere des Gehäuses 6.1 und einen Anschlussbereich 6.3 für wenigstens einen separat ausgebildeten Steckverbinder. Des Weiteren ist ein Kabelfixierungsbereich vorgesehen, der eine Befestigungseinrichtung 5 zur Befestigung eines an dem Kabelabschnitt angebrachten Kabelzugabfangelements 1 aufweist. Die Glasfaseranschlussdose 6 umfasst ferner ein Deckelteil 6.4.

In Figur 11 ist außerdem schematisch dargestellt, wie das zuvor beschriebene Kabelzugabfangelement 1 mit dem fixierten Kabelabschnitt des Glasfaserkabels 2 in der Glasfaseranschlussdose 6 vorzugsweise fixiert werden kann.

## Patentansprüche

1. Kabelzugabfangelement (1) für Glasfaserkabel (2) umfassend:
- einen Grundkörper (3), der wenigstens eine Aufnahme (7) zum Einlegen eines Glasfaserkabels (2), welche Aufnahme (7) eine Längsachse definiert, und wenigstens ein Führungsmittel (8) zur Umlenkung eines Fasermaterials (2.2) in Richtung einer Eintrittsstelle des Glasfaserkabels (2) in den Grundkörper (3) aufweist und
der zur Befestigung des Kabelzugabfangelements (1) in einer Befestigungseinrichtung (5) geeignet ist;
- wenigstens ein Aufnahmeelement (9) zum Einlegen einer Glasfaser (2.4) des Glasfaserkabels (2); und
- wenigstens einen von dem Grundkörper (3) separaten Fixierkörper (10), der mit dem Grundkörper (3) zum Einlegen des Glasfaserkabels (2) verbindbar ist, wobei der Fixierkörper (10) Vorsprünge (10.1) aufweist, die derart ausgebildet sind, dass sich die Vorsprünge (10.1), wenn der Fixierkörper (10) mit dem Grundkörper (3) verbunden ist, in die Aufnahme (7) erstrecken, um ein in den Grundkörper (3) aufgenommenes Glasfaserkabel (2) durch Verklemmen des umgelenkten Fasermaterials (2.2) zu fixieren,
wobei sich die Vorsprünge (10.1) des Fixierkörpers (10) zu ihren freien Enden hin und in Richtung ihrer Erstreckung in die Aufnahme (7) verjüngen, sodass sich die Vorsprünge in einer zu der Längsachse der Aufnahme senkrechten Richtung der Erstreckung in die Aufnahme (7) verjüngen, wenn der Fixierkörper in den Grundkörper eingesetzt ist.

2. Kabelzugabfangelement (1) nach Anspruch 1,
**dadurch gekennzeichnet, dass**
die Vorsprünge (10.1) konisch ausgebildet sind.

3. Kabelzugabfangelement (1) nach Anspruch 1 oder 2,
**dadurch gekennzeichnet, dass**
Kontaktflächen des Fixierkörpers (10), die, wenn der Fixierkörper (10) in den Grundkörper (3) eingesetzt ist, an Innenflächen des Grundkörpers (3) anliegen, zumindest teilweise eine strukturierte Oberfläche aufweisen, um ein Entfernen des Fixierkörpers (10) von dem Grundkörper (3) zu erschweren.

4. Kabelzugabfangelement (1) nach Anspruch 3,
**dadurch gekennzeichnet, dass**
die Kontaktflächen Verrastungselemente und/oder Verzahnungselemente (10.2) aufweisen.

5. Kabelzugabfangelement (1) nach einem der Ansprüche 1 bis 4,
**dadurch gekennzeichnet, dass**
wenigstens eine Seitenwand (3.1) des Grundkörpers (3) wenigstens einen Rücksprung (3.2) und/oder eine Führung aufweist, wobei der wenigstens eine Rücksprung (3.2) und/oder die Führung angeordnet und ausgebildet ist, um jeweils wenigstens einen Teil eines Vorsprungs (10.1) des Fixierkörpers (10) beim Verbinden mit dem Grundkörper (3) zu führen und/oder aufzunehmen.

6. Kabelzugabfangelement (1) nach einem der Ansprüche 1 bis 5,
**dadurch gekennzeichnet, dass**
der Grundkörper (3) elastische Rastelemente (4) zur verrastenden Befestigung des Kabelzugabfangelements (1) in der Befestigungseinrichtung (5) aufweist.

7. Kabelzugabfangelement (1) nach Anspruch 6,
**dadurch gekennzeichnet, dass**
der Grundkörper (3) zumindest bezüglich der elastischen Rastelemente (4) flächensymmetrisch zu einer Mittelebene (M), die orthogonal zur Längsachse der Aufnahme (7) zum Einlegen des Glasfaserkabels (2) verläuft, ausgebildet ist, so dass der Grundkörper (3) in wenigstens zwei Orientierungen mit der Befestigungseinrichtung (5) verbindbar ist.

8. Kabelzugabfangelement (1) nach einem der Ansprüche 1 bis 7,
**dadurch gekennzeichnet, dass**
der Grundkörper (3) eine Außenkontur aufweist derart, dass der Grundkörper (3) mechanisch kompatibel zu einer standardisierten Befestigungseinrichtung für einen LC-Steckverbinder oder LC-Duplex-Steckverbinder oder SC-Steckverbinder oder E-2000-Steckverbinder für Glasfaserkabel (2) ausgebildet ist.

9. Kabelzugabfangelement (1) nach einem der Ansprüche 1 bis 8,
**dadurch gekennzeichnet, dass**
die Führungsmittel durch Ausnehmungen und/oder Stege (8) in dem Grundkörper (3) gebildet sind.

10. Kabelzugabfangelement (1) nach einem der Ansprüche 1 bis 9,
**dadurch gekennzeichnet, dass**
der wenigstens eine in den Grundkörper (3) eingesetzte Fixierkörper (10) unterhalb der Oberseite des Grundkörpers (3) angeordnet ist, wenn der Fixierkörper (10) mit dem Grundkörper (3) verbunden ist.

11. Kabelzugabfangelement (1) nach einem der Ansprüche 1 bis 10,
**dadurch gekennzeichnet, dass**
das Kabelzugabfangelement (1) in seiner Dimensionierung und Bauform zur Aufnahme in einer Glasfaseranschlussdose (6) und zur Verwendung als Zugentlastung eines in der Glasfaseranschlussdose (6) aufgenommenen Kabelabschnitts für Glasfaserkabel (2) ausgelegt ist.

12. Glasfaseranschlussdose (6) aufweisend ein Gehäuse (6.1) zur Aufnahme eines Kabelabschnitts eines Glasfaserkabels (2), umfassend:
- wenigstens eine Ausnehmung (6.2) zur Kabelzuführung in das Innere des Gehäuses (6.1);
- einen Anschlussbereich (6.3) für wenigstens einen separat ausgebildeten Steckverbinder; und
- einen Kabelfixierungsbereich, der eine Befestigungseinrichtung (5) zur Befestigung eines an dem Kabelabschnitt angebrachten Kabelzugabfangelements (1) gemäß einem der Ansprüche 1 bis 11 aufweist,
wobei die Glasfaseranschlussdose (6) mit einem solchen Kabelzugabfangelement (1) gemäß einem der Ansprüche 1 bis 11 ausgerüstet ist.

## Claims

1. Cable tension-absorbing element (1) for glass fiber cables (2), comprising:
- a main body (3) which has at least one receptacle (7) for inserting a glass fiber cable (2), which receptacle (7) defines a longitudinal axis, and at least one guide means (8) for deflecting a fiber material (2.2) in the direction of an entry point of the glass fiber cable (2) into the main body (3), and
which is suitable for fastening the cable tension-absorbing element (1) in fastening means (5);
- at least one receiving element (9) for inserting a glass fiber (2.4) of the glass fiber cable (2); and
- at least one fixing body (10) which is separate from the main body (3) and can be connected to the main body (3) for inserting the glass fiber cable (2), wherein the fixing body (10) has projections (10.1) which are designed such that the projections (10.1) extend into the receptacle (7) when the fixing body (10) is connected to the main body (3), in order to fix a glass fiber cable (2) received in the main body (3) by clamping the deflected fiber material (2.2),
wherein
the projections (10.1) of the fixing body (10) taper towards their free ends and in the direction of their extent into the receptacle (7), such that the projections taper in a direction of the extent into the receptacle (7) perpendicular to the longitudinal axis of the receptacle when the fixing body is inserted into the main body.

2. Cable tension-absorbing element (1) according to claim 1,
**characterized in that**
the projections (10.1) are conical in shape.

3. Cable tension-absorbing element (1) according to claim 1 or 2,
**characterized in that**
contact surfaces of the fixing body (10) which, when the fixing body (10) is inserted into the main body (3), bear against inner surfaces of the main body (3), have at least partially a structured surface in order to make it more difficult to remove the fixing body (10) from the main body (3).

4. Cable tension-absorbing element (1) according to claim 3,
**characterized in that**
the contact surfaces have latching elements and/or toothed elements (10.2).

5. Cable tension-absorbing element (1) according to one of claims 1 to 4,
**characterized in that**
at least one side wall (3.1) of the main body (3) has at least one recess (3.2) and/or a guide, wherein the at least one recess (3.2) and/or the guide is arranged and designed to guide and/or receive in each case at least one part of a projection (10.1) of the fixing body (10) during connection to the main body (3).

6. Cable tension-absorbing element (1) according to one of claims 1 to 5,
**characterized in that**
the main body (3) has elastic latching elements (4) for a latching fastening of the cable tension-absorbing element (1) in the fastening means (5).

7. Cable tension-absorbing element (1) according to claim 6,
**characterized in that**
the main body (3) is designed to be surface-symmetrical at least with respect to the elastic latching elements (4) with respect to a central plane (M) which runs orthogonally to the longitudinal axis of the receptacle (7) for inserting the glass fiber cable (2), such that the main body (3) can be connected to the fastening means (5) in at least two orientations.

8. Cable tension-absorbing element (1) according to one of claims 1 to 7,
**characterized in that**
the main body (3) has an outer contour such that the main body (3) is designed to be mechanically compatible with a standardized fastening means for an LC plug connector or LC duplex plug connector or SC plug connector or E-2000 plug connector for glass fiber cables (2).

9. Cable tension-absorbing element (1) according to one of claims 1 to 8,
**characterized in that**
the guide means are formed by recesses and/or webs (8) in the main body (3).

10. Cable tension-absorbing element (1) according to one of claims 1 to 9,
**characterized in that**
the at least one fixing body (10) inserted into the main body (3) is arranged below the upper side of the main body (3) when the fixing body (10) is connected to the main body (3).

11. Cable tension-absorbing element (1) according to one of claims 1 to 10,
**characterized in that**
the cable tension-absorbing element (1) is designed in terms of its dimensioning and design for receptacle in a glass fiber junction box (6) and for use as strain relief of a cable section for glass fiber cables (2) received in the glass fiber junction box (6).

12. Glass fiber junction box (6) having a housing (6.1) for receptacle of a cable section of a glass fiber cable (2), comprising:
- at least one recess (6.2) for feeding cables into the interior of the housing (6.1);
- a connection region (6.3) for at least one separately formed plug connector; and
- a cable fixing region which has fastening means (5) for fastening a cable tension-absorbing element (1) according to one of claims 1 to 11 attached to the cable section,
wherein the glass fiber junction box (6) is equipped with such a cable tension-absorbing element (1) according to one of claims 1 to 11.

## Revendications

1. Élément d'interception de traction de câble (1) pour câble fibre optique (2) comprenant :
- un corps de base (3) qui présente au moins un logement (7) pour l'insertion d'un câble fibre optique (2), lequel logement (7) définit un axe longitudinal, et au moins un moyen de guidage (8) pour dévier un matériau fibreux (2.2) en direction d'un point d'entrée du câble fibre optique (2) dans le corps de base (3) et
qui convient pour la fixation de l'élément d'interception de traction de câble (1) dans un dispositif de fixation (5) ;
- au moins un élément de réception (9) pour l'insertion d'une fibre optique (2.4) du câble fibre optique (2) ; et
- au moins un corps de fixation (10) séparé du corps de base (3), qui peut être relié au corps de base (3) pour l'insertion du câble fibre optique (2), le corps de fixation (10) présentant des saillies (10.1) qui sont réalisées de telle sorte que les saillies (10.1), lorsque le corps de fixation (10) est relié au corps de base (3), s'étendent dans le logement (7) afin de fixer un câble fibre optique (2) reçu dans le corps de base (3) par serrage du matériau fibreux dévié (2.2),
dans lequel
les saillies (10.1) du corps de fixation (10) se rétrécissent vers leurs extrémités libres et dans la direction de leur extension dans le logement (7) de telle sorte que les saillies se rétrécissent dans une direction perpendiculaire à l'axe longitudinal du logement de l'extension dans le logement (7) lorsque le corps de fixation est inséré dans le corps de base.

2. Élément d'interception de traction de câble (1) selon la revendication 1, **caractérisé en ce que**
les saillies (10.1) sont réalisées de manière conique.

3. Élément d'interception de traction de câble (1) selon la revendication 1 ou 2,
**caractérisé en ce que**
des surfaces de contact du corps de fixation (10) qui, lorsque le corps de fixation (10) est inséré dans le corps de base (3), s'appliquent contre des surfaces intérieures du corps de base (3), présentent au moins en partie une surface structurée afin de rendre plus difficile un enlèvement du corps de fixation (10) du corps de base (3).

4. Élément d'interception de traction de câble (1) selon la revendication 3, **caractérisé en ce que**
les surfaces de contact présentent des éléments d'encliquetage et/ou des éléments de denture (10.2).

5. Élément d'interception de traction de câble (1) selon l'une des revendications 1 à 4,
**caractérisé en ce que**
au moins une paroi latérale (3.1) du corps de base (3) présente au moins un retrait (3.2) et/ou un guidage, l'au moins un retrait (3.2) et/ou le guidage étant disposés et réalisés afin de guider et/ou de recevoir respectivement au moins une partie d'une saillie (10.1) du corps de fixation (10) lors de la liaison avec le corps de base (3).

6. Élément d'interception de traction de câble (1) selon l'une des revendications 1 à 5,
**caractérisé en ce que**
le corps de base (3) présente des éléments d'encliquetage élastiques (4) pour la fixation par encliquetage de l'élément d'interception de traction de câble (1) dans le dispositif de fixation (5).

7. Élément d'interception de traction de câble (1) selon la revendication 6, **caractérisé en ce que**
le corps de base (3) est réalisé au moins par rapport aux éléments d'encliquetage élastiques (4) avec une symétrie de surface par rapport à un plan médian (M) qui s'étend perpendiculairement à l'axe longitudinal du logement (7) pour l'insertion du câble fibre optique (2) de telle sorte que le corps de base (3) peut être relié dans au moins deux orientations au dispositif de fixation (5).

8. Élément d'interception de traction de câble (1) selon l'une des revendications 1 à 7,
**caractérisé en ce que**
le corps de base (3) présente un contour extérieur de telle sorte que le corps de base (3) est réalisé de manière mécaniquement compatible avec un dispositif de fixation standardisé pour un connecteur enfichable LC ou un connecteur enfichable LC duplex ou un connecteur enfichable SC ou un connecteur enfichable E-2000 pour câble fibre optique (2).

9. Élément d'interception de traction de câble (1) selon l'une des revendications 1 à 8,
**caractérisé en ce que**
les moyens de guidage sont formés par des évidements et/ou des nervures (8) dans le corps de base (3).

10. Élément d'interception de traction de câble (1) selon l'une des revendications 1 à 9,
**caractérisé en ce que**
l'au moins un corps de fixation (10) inséré dans le corps de base (3) est disposé sous le côté supérieur du corps de base (3) lorsque le corps de fixation (10) est relié au corps de base (3).

11. Élément d'interception de traction de câble (1) selon l'une des revendications 1 à 10,
**caractérisé en ce que**
l'élément d'interception de traction de câble (1) est conçu, dans son dimensionnement et sa forme de construction, pour être reçu dans une boîte de raccordement de fibre optique (6) et pour être utilisé comme décharge de traction d'une section de câble pour câble fibre optique (2) reçue dans la boîte de raccordement de fibre optique (6).

12. Boîte de raccordement de fibre optique (6) présentant un boîtier (6.1) pour recevoir une section de câble d'un câble fibre optique (2), comprenant :
- au moins un évidement (6.2) pour l'amenée de câble à l'intérieur du boîtier (6.1) ;
- une zone de raccordement (6.3) pour au moins un connecteur enfichable réalisé séparément ; et
- une zone de fixation de câble qui présente un dispositif de fixation (5) pour la fixation d'un élément d'interception de traction de câble (1) selon l'une quelconque des revendications 1 à 11 monté sur la section de câble,
dans lequel la boîte de raccordement de fibre optique (6) est équipée d'un tel élément d'interception de traction de câble (1) selon l'une quelconque des revendications 1 à 11.
